# EUROPEAN PATENT SPECIFICATION

(11) **EP 3 394 947 B1**
(45) Date of publication and mention of the grant of the patent: **27.10.2021**
(21) Application number: 16825397.9
(22) Date of filing: 21.12.2016
(51) Int. Cl.: H02J 3/14, H02M 5/12, H02P 13/06

(54) **DEVICE FOR MANAGING THE POWER SUPPLY VOLTAGE DERIVING FROM AN ELECTRICAL NETWORK**
VORRICHTUNG ZUR VERWALTUNG DER VERSORGUNGSSPANNUNG AUS EINEM STROMNETZ
DISPOSITIF DE GESTION DE LA TENSION D'ALIMENTATION PROVENANT D'UN RÉSEAU ÉLECTRIQUE

(30) Priority: 23.12.2015 IT UB20159453
(43) Date of publication of application: 31.10.2018
(73) Proprietor: Icopower S.r.l., 20149 Milano (IT)
(72) Inventor: TRINGALI, Nicolas, 20010 Cornaredo Mi (IT); SEMINO, Elvio, 20161 Milano (IT)
(74) Representative: Mittler, Andrea
(86) International application number: PCT/EP2016/082105
(87) International publication number: WO 2017/108905

(56) References cited:
- EP-A1- 2 942 796
- GB-A- 2 520 336

## Description

The present invention relates to a device for managing the power supply voltage deriving from an electrical network.

Currently, the electrical networks in the various states provide the power supply electricity for industrial plants or domestic installations not at a standard value, but with a variation in the percentage of the standard value, for example 10 %.

This creates continuous variations of electricity absorption by machinery and devices of industrial plants calibrated to operate at a well-determined electricity value; said absorption peaks may therefore cause damage, sometimes even significant, to machinery and devices of industrial plants and additional management costs.

GB 2520336 discloses a voltage regulation device comprises a transformer 2 with a set of independent primary windings P1, P2, P3 and a secondary coil S1 in series with the unregulated input voltage. Relays 10, 12, 14, 16 on the low current primary side are switched by a control processor 20 to energize selected primary coils P1, P2, P3 in order to add or subtract from the input voltage by a predetermined amount, delivering a regulated voltage output. The primary windings P1, P2, P3 can be bypassed if no correction is required. The switches are controlled by a microprocessor controller 20 in order to select different taps from the transformer. The processor 20 measures the outgoing voltage and closes only one of the 4 relays in order to select the transformer ratio best able to deliver the required output voltage.

EP 2942796 discloses a voltage control system 10, 70 for medium voltage applications, comprising the following components: a booster transformer 12, 76 and a feeder transformer 18, 78 transformer with respective primary and secondary winding, wherein the secondary winding 22 of the feeder transformer 18, 78 is electrically connected with the primary winding 14 of the booster transformer 12, 76 in an intermediate circuit (50), wherein at least one of the transformer windings 14, 22 in the intermediate circuit 50 comprises at least two taps 24, wherefrom one is selectable as active tap. The secondary winding 16 of the booster transformer 12, 76 is connected, at the output of the voltage control system, in series with a transmission line that's voltage is to be regulated.

In consideration of the prior art, the object of the present invention is to provide a device for managing the power supply voltage deriving from an electrical network that reduces the additional consumption due to the excess of electrical network voltage variation of the national electrical network.

According to present invention, such an object is obtained by means of a device for managing the power supply voltage deriving from an electrical network as defined in claim 1.

Thanks to the present invention it is possible to provide a device for managing the power supply voltage deriving from an electrical network that allows a considerable energy saving. Said management device does not stabilize the power supply voltage deriving from the electrical network, that is, it does not emit a regulated output voltage but reduces the additional consumption due to the excess of electrical network voltage variation of the national electrical network. Said management device lowers the value of the electrical network voltage in the presence of an excess of electrical network voltage variation of the national electrical network.

The management device lowers the value of the network output voltage in relation to the value of the network input voltage, regardless of what output load is connected.

The features and advantages of the present invention will become apparent from the following detailed description of an embodiment thereof, illustrated by way of non-limiting example in the accompanying drawings, in which:
Figure 1 is a block diagram of the device for managing the power supply voltage deriving from an electrical network according to the present invention;
Figure 2 is a more detailed electrical circuit scheme of the device for managing the power supply voltage deriving from an electrical network according to an embodiment of the present invention;
Figure 3 is a more detailed electrical circuit scheme of the device for managing the power supply voltage deriving from an electrical network according to a variant of the embodiment of the present invention;
Figure 4 shows a time diagram of the power supply voltage deriving from an electrical network and of the device output voltage according to the invention;
Figure 5 is a circuit scheme of a part of the device for managing the power supply voltage deriving from an electrical network according to another variant of the embodiment of the present invention.

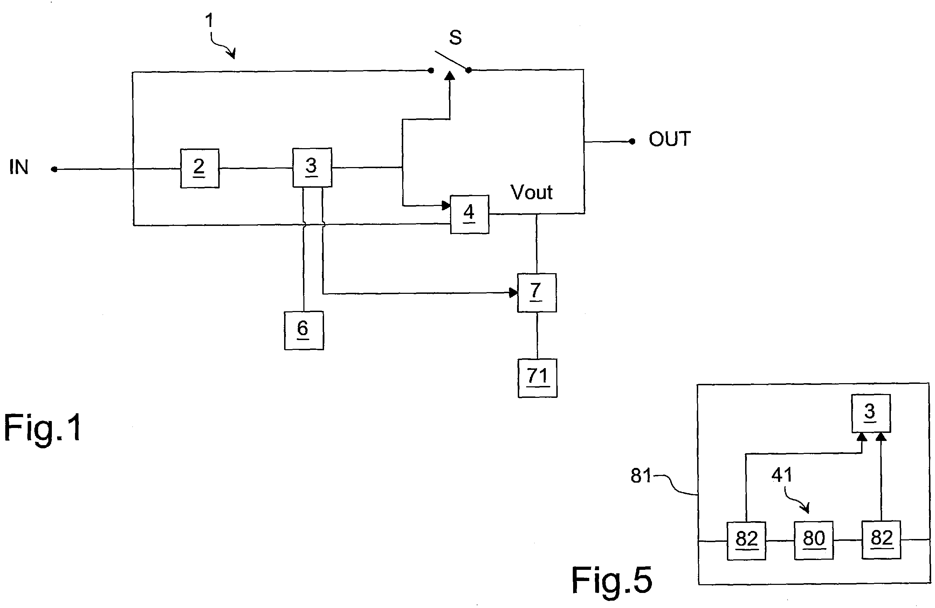

Figure 1 shows a device 1 for managing the power supply voltage deriving from an electrical network according to the present invention.

The device 1 comprises an input IN for receiving the electrical energy Eal provided by the electrical network, detection means 2 adapted to detect the parameters of the electrical energy Eal at the input terminal IN, for example the voltage Val and the current Ial of the electrical energy Eal, control means 3 adapted to analyze the voltage Val and the current Ial detected by the means 2 and adapted to control the means 4 in relation to the detected parameters; the means 4 are adapted to limit the peaks of the power supply voltage Val at the input by providing at the output terminal OUT a more constant voltage Vout.

Preferably, the control means 3 are adapted to deactivate the means 4, by acting on the generic switch S of Figure 1 arranged between the input terminal IN and the output terminal OUT, and to send to the output terminal OUT the electrical power present at the input terminal IN, that is, to make the device 1 operate as by-pass, in the presence of overcurrent at the input, that is, if the current Ial detected by the means 2 is higher than a given amount Ial-ref (for example, 63 A), or in the case wherein the device 1 has a failure or in the presence of an undervoltage, that is, a voltage Val lower than a given voltage Val-ref (for example, 218 V); thereby, a power supply voltage at the output is always ensured for the various electrical devices of the industrial plant or domestic installation where the device 1 is installed.

Preferably, the device 1 also comprises a mechanical self-latching system able to keep as by-pass the device 1 in case of absence of the electrical energy Eal.

Preferably, the device 1 comprises indicators 6, for example, LED diodes, adapted to indicate the operating status of the device 1; said indicators allow to inform the user if the device 1 operates as a voltage limiter or as by-pass of the input voltage. The indicators 6 are controlled by the control means 3.

Preferably, an electrical power counter 7 is present, controlled by the control means for measuring the electrical power that passes through the device 1. In a screen 71 it is possible to display the electrical energy detected by the counter 7. Preferably, the counter 7, in the case wherein also the input terminal IN is connected, acts as detection means 2 as it is able to detect the parameters of the electrical energy Eal at the input terminal IN.

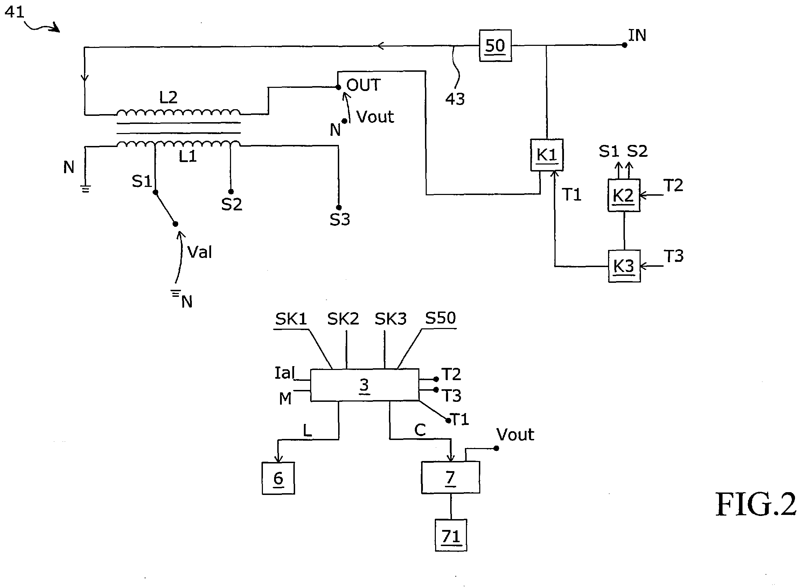

The means 4, according to the embodiment of the present invention, comprise at least one transformer 41 of the multiple taps S1-S3 type with a primary winding L1 and a secondary winding L2 (Figure 2). The primary winding L1 and the secondary winding L2 are in phase opposed, as the voltage across the secondary winding L2 is placed so as to subtract voltage from the voltage across the primary winding L1. The multiple taps S1-S3 belong to the primary winding L1 and only the taps S1, S2 are selectable. At the selected tap S1, S2 the power supply voltage Val is present, while the secondary winding L2 is arranged between the input terminal IN and the output terminal OUT.

Each tap S1, S2 allows to obtain a partition of the input voltage Val; thereby, the output voltage Vout of the device 1 will only be a part of the voltage Val.

The selection of one of the two taps S1 and S2 is defined by a switch K2, preferably a remote controller switch, controlled by means of the signal T2 by the control device 3.

The device 1 comprises another switch K3, preferably a remote controller switch, controlled by means of the signal T3 by the control means or control device 3 and a further switch K1, preferably a remote controller switch; the remote controller switch K1 is typically open to allow the power supply of the primary winding L1 and the secondary winding L2 and the remote controller switch K3 is typically arranged so as to allow the power supply of the remote controller switch K2.

The taps S1 and S2 refer to two different partitions of the primary winding L1; thereby, it is possible to externally manage the required amount of output voltage Vout as a percentage of the power supply voltage Val deriving from the electrical network. In particular, the taps S1 and S2 identify a smaller (S1) or greater (S2) partition of the primary winding L1 which corresponds to a lower or greater output voltage Vout at the output terminal OUT. If the voltage Val keeps being higher than a reference voltage Val-th (Val>Val-th wherein for example Val-th=228 V), initially, the control device 3 selects the tap S1 to have a lower output voltage Vout; in case the voltage Val falls below the reference value Val-th (Val<Val-th), the control device 3 in response selects by means of the control T2 the tap S2 to increase the output voltage Vout.

The presence of the currents circulating in phase opposed through the respective primary winding L1 and secondary winding L2 allows a current with a lower value than the current Ial to circulate on the transformer core 41; this allows a low heating of the ferromagnetic core of the transformer 41 and low losses.

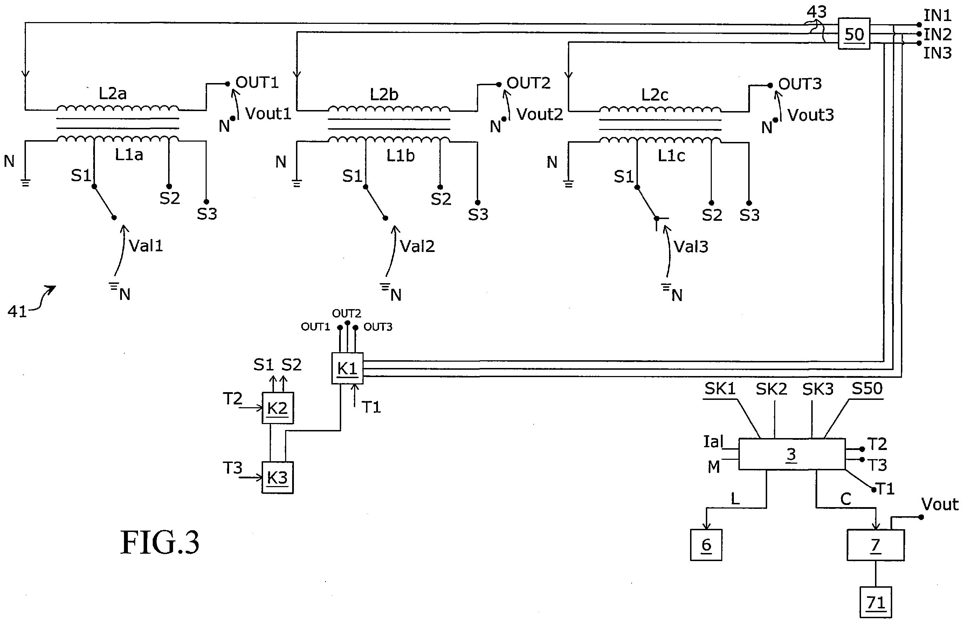

Preferably, in case the electrical energy Eal provided by the electrical network is of the three-phase type according to a variant of the embodiment of the present invention (Figure 3), the components Ial1, Ial2, Ial3 of the current Ial are at the inputs on the respective terminals IN1, IN2 and IN3 and the transformer 41 comprises three primary windings L1a, L1b and L1c and three secondary windings L2a, L2b and L2c in phase opposed, as the voltage across the three secondary windings L2a, L2b and L2c is placed so as to subtract voltage from the voltage across the three primary windings L1a, L1b and L1c. Each primary winding L1a, L1b and L1c has the multiple taps S1-S3 and only the taps S1, S2 are selectable; on the selected tap S1, S2 of the three primary windings L1a, L1b and L1c the power supply voltage Val is present, given by the respective components Val1, Val2, Val3, while the three secondary windings L2a, L2b and L2c are arranged between the input terminals IN1, IN2 and IN3 and the output terminals OUT1, OUT2 and OUT3.

Each tap S1, S2 allows to obtain a partition of the input voltage Val; thereby, the output voltage Vout of the device 1 will only be a part of the voltage Val.

The selection of one of the two taps S1 and S2 is defined by a switch K2, preferably a remote controller switch, controlled by means of the signal T2 by the control device 3.

The device 1 comprises another switch K3, preferably a remote controller switch, controlled by means of the signal T3 by the control device 3 and a further switch K1, preferably a remote controller switch, arranged in parallel to the transformer 41; the remote controller switch K1 is typically open to allow the power supply of the primary windings L1a, L1b and L1c and the secondary windings L2a, L2b and L2c and the remote controller switch K3 is controlled so as to allow the power supply of the remote controller switch K2.

The taps S1 and S2 refer to two different partitions of the primary windings L1a, L1b and L1c; thereby, it is possible to manage the required amount of output voltage Vout as a percentage of the power supply voltage Val deriving from the electrical network. In particular, the taps S1 and S2 identify a smaller (S1) or greater (S2) partition of the primary windings L1a, L1b and L1c, which corresponds to a lower or greater output voltage Vout1, Vout2 and Vout3. If the voltage Val keeps being greater than a reference voltage Val-th (Val>Val-th), initially, the control device 3 selects the tap S1 to have a lower output voltage Vout1, Vout2 and Vout3; in case the voltage Val falls below the reference rate of Val-th (Val<Val-th), the control device 3 in response selects by means of the control T2 the tap S2 to increase the output voltage Vout1, Vout2 and Vout3.

The presence of the currents circulating in phase opposed through the respective primary windings L1a, L1b and L1c and secondary windings L2a, L2b and L2c allows a current with a lower value than the current Ial to circulate on the transformer core 41; this allows a low heating of the ferromagnetic core of the transformer 41 and low losses.

The remote controller switch K1 is closed when a control T3 is sent by the device 3 to the remote controller switch K3, which interrupts the power supply of the remote controller switch K2 and allows the closing of the remote controller switch K1 supplying power to it. The remote controller switch K1 is closed in case the device 1 is in by-pass phase. In particular, when the control device 3, after the detection of an overcurrent at the input, that is, an input current Ial higher than a predetermined current Ial-ref, or in the presence of a failure of the device 1 or in the presence of an undervoltage, that is, a voltage Val lower than a given voltage Val-ref, controls the bringing about of the by-pass status, the control device 3 itself controls the remote controller switch K3 for interrupting the power supply of the remote controller switch K2 and allowing the closing of the remote controller switch K1; thereby, a voltage is always present on the output terminal OUT1, OUT2, OUT3 of the device 1. The set of remote controller switchs K1- K3 represents the generic switch S of Figure 1.

A failure of an element of the device 1 is detected by the control device 3 monitoring the state of the remote controller switchs K1- K3 by means of the signals SK1-SK3 and monitoring the state of the thermal magnetic circuit-breaking device 50, arranged between the terminals of the secondary windings L2a, L2b and L2c and the input terminals IN1, IN2 and IN3 of the device 1, by means of the signal S50.

Preferably, the control device 3 is equipped with an electromechanical system called mechanical self-latching for the remote controller switch K1 which allows to make the by-pass remain active in case of absence of electrical energy Eal from the electrical network.

To exit the by-pass status, the control device 3, after the detection of an input current Ial lower than the predetermined current Ial-ref or a supply voltage Val higher than the reference voltage Val-ref or after the resolution of the failure of the device 1, controls at first the opening of the remote controller switch K1 by means of a control signal T1 and then the interruption of the power supply of the remote controller switch K1 with a control signal T3 to the remote controller switch K3 with a resulting control of the power supply of the remote controller switch K2.

Preferably, the by-pass status may be forced by the user; by means of an external control M activatable by means of a button, the user may control the control device 3 to bring the device 1 in a by-pass status.

Preferably, the control device 3 comprises a programmable logic controller or PLC which processes the input signals Ial, M, SK1-SK3 and S50 and sends the signals T1-T3 for the control of the remote controller switchs K1-K3. The PLC is also able to detect an overcurrent (Ial>Ial-ref) at the input terminal IN and, if the power supply voltage Val is higher or lower than the voltage Val-th, to control the remote controller switch K2 to respectively select the tap S2 or the tap S1.

The PLC also sends the control signals L and C respectively to the LED diodes 6 and the counter 7.

Preferably, the control device 3 may be controlled remotely, in particular by means of a TCP/IP data line.

The LED diodes 6 indicate the normal operating status of the device 1, the presence of a failure in the device 1 and if the device 1 itself is in by-pass status.

The counter 7 activated by the control C allows to detect the electrical power which transits in the device 1. As it is possible to make the device 1 operate in by-pass status, the counter allows to detect the electrical power that transits in the device 1 also when the latter is in by-pass status; the screen 71 allows to display the electrical power that transits both when the device 1 is in operation status, and when the device 1 is in by-pass status. Preferably, the counter 7 comprises means for the remote transmission of data.

Protective devices are provided for the various elements of the device 1 which comprise thermal magnetic circuit-breaking devices for some elements and fuses for other elements of the device 1. For example, the thermal magnetic circuit-breaking device 50 is provided for, arranged between the terminal 43 of the transformer 41 and the input terminal IN of the device 1.

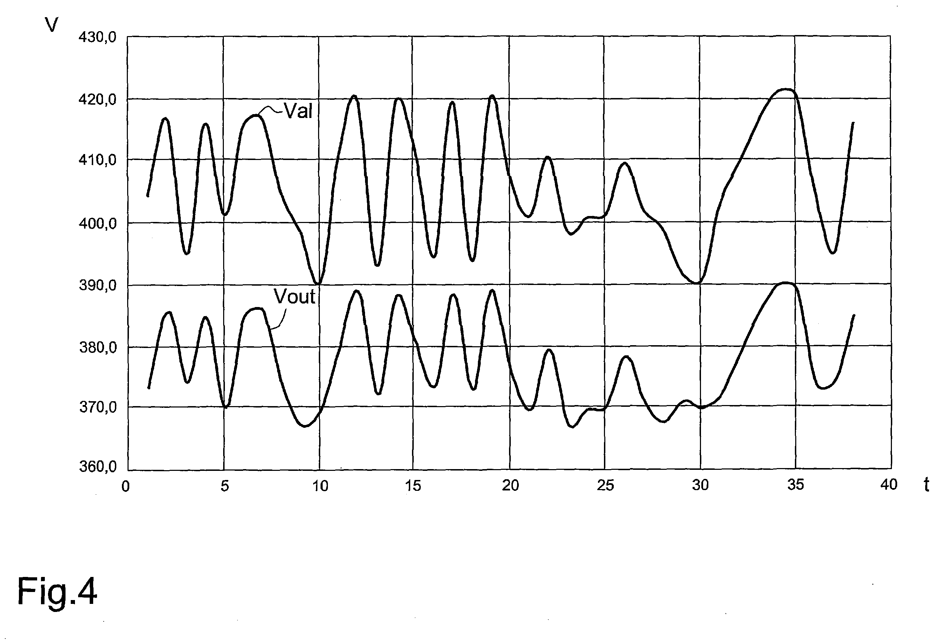

The chart in Figure 4 shows the time diagrams of the power supply voltage Val and of the output voltage Vout; the output voltage Vout is lower than the voltage Val if no input overcurrent is detected, while in the presence of an overcurrent at the input, the device goes in by-pass mode by bringing the output voltage Vout equal to the voltage Val.

According to another variant of the embodiment of the present invention, the transformer 41 of the device 1 comprises a core 80, and the device is contained in a metal box 81 or case which acts as a heatsink of the heat produced by the core 80, as schematically shown in Figure 5. Between the core 80 and the case 81 a plurality of thermocouples 82 is arranged, for example Peltier cells, preferably connected in series one with the other and adapted to transform the heat difference between core and case into electrical power and to supply it to the device 1, preferably to the control means 3, to meet part of the self-consumption of the device 1, increasing the performance thereof.

## Claims

1. Device for managing the supply voltage (Val) deriving from an electric network, comprising means (4) having at the input said supply voltage of the electric network and configured to limit the peaks of the supply voltage by providing at the output terminal an output voltage (Vout; Vout1, Vout2, Vout3) having a value less than the supply voltage deriving from the electric network, said means comprise at least one transformer (41) provided with a primary winding (L1; L1a, L1b, L1c) and a secondary winding (L2; L2a, L2b, L2c) arranged in phase opposed, said secondary winding being connected between the input (IN; IN1, IN2, IN3) and output terminals (OUT; OUT1, OUT2, OUT3) of the device and said primary winding comprising at least two taps (S1, S2), said device comprising further means (3, K2, K3) configured to select one of said two taps of the primary winding as a function of the electric network supply voltage value, said supply voltage (Val) being applied between said selected tap and the neutral (N), said two taps comprising a first tap (S2) and a second tap (S1) associated respectively to a first output voltage and a second output voltage wherein said first output voltage is higher than said second output voltage, **characterized in that** said further means are configured to select said second tap in response to an electric network supply voltage higher than a reference voltage (Val-th) or said first tap in response to an electric network supply voltage lower than said reference voltage.

2. Device according to claim 1, **characterized by** comprising means (2, 3) configured to detect a failure of said device or an overcurrent at the input, a first switch (K1) arranged in parallel to the transformer, control means (3) configured to control the closing of said first switch in response of a failure of the device or a overcurrent detected by the detecting means.

3. Device according to claim 2, **characterized in that** said detection means (2, 3) are configured to detect also an undervoltage at the input and said control means (3) are adapted to control the closing of said first switch in response to an undervoltage detected by said detection means.

4. Device according to claim 2, **characterized in that** said first switch (K1) is a remote controller switch.

5. Device according to claim 4, **characterized in that** said further means comprise a second (K2) and a third (K3) remote controller switches and said control means (3) are configured to control said second and third remote controller switches, said control means being configured to control the supply of the first or second remote controller switch by means of the third remote controller switch and the selection of the first or second tap by means of the second remote controller switch in the case wherein the second remote controller switch is supplied by means of the third remote controller switch.

6. Device according to claim 5, **characterized by** comprising a thermal magnetic circuit breaker (50) arranged between the input terminal of the device (1) and one terminal (43) of the transformer, said detecting means (3) being configured to detect a failure of the device on the basis of respective monitoring signals (SK1-SK3, SK50) of the state of said thermal magnetic circuit breaker and of the first, second and third remote controller switches.

7. Device according to claim 2, **characterized in that** said control means (3) are configured to force the closing of said first switch in response to an external command (M)

8. Device according to claim 2, **characterized in that** said control means (3) are configured to maintain closed said first switch (K1) when said supply voltage (Val) of the electric network is absent.

9. Device according to claim 1, **characterized by** comprising a plurality of thermocouples (82) arranged between the core (80) of the transformer and the metallic case (81) of the device and configured to convert the thermal difference between core and metallic case to electrical energy and to provide it to the device.

10. Device according to claim 1, **characterized by** comprising a counter (7) configured to quantify the electrical energy provided from said device, said counter (7) being activated (C) by said control means (3).

11. Device according to claim 1, **characterized in that** said supply voltage has three phases and said transformer (41) comprises three primary windings (L1a, L1b, L1c) and three secondary windings (L2a, L2b, L2c), each primary winding comprising at least two taps (S1, S2).

## Patentansprüche

1. Vorrichtung zum Managen der aus einem elektrischen Netz stammenden Versorgungsspannung (Va1), umfassend Mittel (4), die am Eingang die Versorgungsspannung des elektrischen Netzes haben und konfiguriert sind, um die Spitzen der Versorgungsspannung durch Bereitstellen einer Ausgangsspannung (Vout; Vout1, Vout2, Vout3) mit einem Wert, der kleiner als die aus dem elektrischen Netz stammende Versorgungsspannung ist, am Ausgangsanschluss zu begrenzen, wobei die Mittel wenigstens einen Stromwandler bzw. Transformator (41) umfassen, der mit einer Primärwicklung (L1; L1a, L1b, L1c) und einer bezüglich eine Phase entgegengesetzt angeordneten Sekundärwicklung (L2; L2a, L2b, L2c) versehen ist, wobei die Sekundärwicklung zwischen dem Eingang (IN; IN1, IN2, IN3) und Ausgangsanschlüssen (OUT; OUT1, OUT2, OUT3) der Vorrichtung angeschlossen ist und wobei die Primärwicklung wenigstens zwei Abgriffe (S1, S2) umfasst, wobei die Vorrichtung weitere Mittel (3, K2, K3) umfasst, die konfiguriert sind, um einen der zwei Abgriffe der Primärwicklung als eine Funktion des Werts der Versorgungsspannung des elektrischen Netzes auszuwählen, wobei die Versorgungsspannung (Va1) zwischen dem ausgewählten Abgriff und dem Nullleiter (N) angelegt wird, wobei die zwei Abgriffe einen ersten Abgriff (S2) und einen zweiten Abgriff (S1) umfassen, die jeweils mit einer ersten Ausgangsspannung und einer zweiten Ausgangsspannung assoziiert sind, wobei die erste Ausgangsspannung höher als die zweite Ausgangsspannung ist, **dadurch gekennzeichnet, dass** die weiteren Mittel konfiguriert sind, um den zweiten Abgriff in Reaktion auf eine Versorgungsspannung des elektrischen Netzes auszuwählen, die höher als eine Referenzspannung (Va1-th) ist, oder den ersten Abgriff in Reaktion auf eine Versorgungsspannung des elektrischen Netzes auszuwählen, die niedriger als die Referenzspannung ist.

2. Vorrichtung nach Anspruch 1, **dadurch gekennzeichnet, dass** sie Mittel (2, 3) umfasst, die konfiguriert sind, um einen Fehler der Vorrichtung oder einen Überstrom am Eingang zu detektieren, einen ersten Schalter (K1), der parallel zum Transformator angeordnet ist, Steuermittel (3), die konfiguriert sind, um das Schließen des ersten Schalters in Reaktion auf einen Fehler der Vorrichtung oder einen durch die Detektionsmittel detektierten Überstrom zu steuern.

3. Vorrichtung nach Anspruch 2, **dadurch gekennzeichnet, dass** die Detektionsmittel (2, 3) konfiguriert sind, um auch eine Unterspannung am Eingang zu detektieren, und die Steuermittel (3) dazu geeignet sind, das Schließen des ersten Schalters in Reaktion auf eine durch die Detektionsmittel detektierte Unterspannung zu steuern.

4. Vorrichtung nach Anspruch 2, **dadurch gekennzeichnet, dass** der erste Schalter (K1) ein fernbedienter Schalter ist.

5. Vorrichtung nach Anspruch 4, **dadurch gekennzeichnet, dass** die weiteren Mittel einen zweiten (K2) und einen dritten (K3) fernbedienten Schalter umfassen und die Steuermittel (3) konfiguriert sind, um den zweiten und den dritten fernbedienten Schalter zu steuern, wobei die Steuermittel konfiguriert sind, um die Versorgung des ersten oder zweiten fernbedienten Schalters mittels des dritten fernbedienten Schalters zu steuern, und die Auswahl des ersten oder zweiten Abgriffs mittels des zweiten fernbedienten Schalters, in dem Fall, in welchem der zweite fernbediente Schalter mittels des dritten fernbedienten Schalters versorgt wird.

6. Vorrichtung nach Anspruch 5, **dadurch gekennzeichnet, dass** sie einen magnetischen Thermoschutzschalter (50) umfasst, der zwischen dem Eingangsanschluss der Vorrichtung (1) und einem Anschluss (43) des Transformators angeordnet ist, wobei die Detektionsmittel (3) konfiguriert sind, um einen Fehler der Vorrichtung auf der Basis von jeweiligen Überwachungssignalen (SK1-SK3, SK50) des Zustands des magnetischen Thermoschutzschalters und des ersten, des zweiten und des dritten fernbedienten Schalters zu detektieren.

7. Vorrichtung nach Anspruch 2, **dadurch gekennzeichnet, dass** die Steuermittel (3) konfiguriert sind, um das Schließen des ersten Schalters in Reaktion auf einen externen Befehl (M) zu erzwingen.

8. Vorrichtung nach Anspruch 2, **dadurch gekennzeichnet, dass** die Steuermittel (3) konfiguriert sind, um den ersten Schalter (K1) geschlossen zu halten, wenn die Versorgungsspannung (Va1) des elektrischen Netzes nicht vorhanden ist.

9. Vorrichtung nach Anspruch 1, **dadurch gekennzeichnet, dass** sie eine Vielzahl von Thermoelementen (82) umfasst, die zwischen dem Kern (80) des Transformators und dem metallischen Gehäuse (81) der Vorrichtung angeordnet und konfiguriert sind, um die thermische Differenz zwischen Kern und metallischem Gehäuse in elektrische Energie umwandeln und sie der Vorrichtung zur Verfügung zu stellen.

10. Vorrichtung nach Anspruch 1, **dadurch gekennzeichnet, dass** sie einen Zähler (7) umfasst, der konfiguriert ist, um die von der Vorrichtung bereitgestellte elektrische Energie zu quantifizieren, wobei der der Zähler (7) durch die Steuermittel (3) aktiviert (C) wird.

11. Vorrichtung nach Anspruch 1, **dadurch gekennzeichnet, dass** die Versorgungsspannung drei Phasen hat und der Transformator (41) drei Primärwicklungen (L1a, L1b, L1c) und drei Sekundärwicklungen (L2a, L2b, L2c) umfasst, wobei jede Primärwicklung wenigstens zwei Abgriffe (S1, S2) umfasst.

## Revendications

1. Dispositif de gestion de la tension d'alimentation (Val) provenant d'un réseau électrique, comprenant des moyens (4) présentant, au niveau de l'entrée, ladite tension d'alimentation du réseau électrique, et configurés de manière à limiter les pics de la tension d'alimentation en fournissant, au niveau de la borne de sortie, une tension de sortie (Vout ; Vout1, Vout2, Vout3) présentant une valeur inférieure à la tension d'alimentation provenant du réseau électrique, dans lequel lesdits moyens comprennent au moins un transformateur (41) doté d'un enroulement primaire (L1 ; L1a, L1b, L1c) et d'un enroulement secondaire (L2 ; L2a, L2b, L2c) agencés en opposition de phase, ledit enroulement secondaire étant connecté entre les bornes d'entrée (IN ; IN1, IN2, IN3) et de sortie (OUT ; OUT1, OUT2, OUT3) du dispositif, et ledit enroulement primaire comprenant au moins deux prises (S1, S2), ledit dispositif comprenant des moyens supplémentaires (3, K2, K3) configurés de manière à sélectionner l'une desdites deux prises de l'enroulement primaire en fonction de la valeur de tension d'alimentation de réseau électrique, ladite tension d'alimentation (Val) étant appliquée entre ladite prise sélectionnée et le neutre (N), lesdites deux prises comprenant une première prise (S2) et une seconde prise (S1) associées respectivement à une première tension de sortie et une seconde tension de sortie, dans lesquelles ladite première tension de sortie est supérieure à ladite seconde tension de sortie, **caractérisé en ce que** lesdits moyens supplémentaires sont configurés de manière à sélectionner ladite seconde prise en réponse à une tension d'alimentation de réseau électrique supérieure à une tension de référence (Val-th), ou ladite première prise en réponse à une tension d'alimentation de réseau électrique inférieure à ladite tension de référence.

2. Dispositif selon la revendication 1, **caractérisé en ce qu'**il comprend des moyens (2, 3) configurés de manière à détecter une défaillance dudit dispositif ou une surintensité au niveau de l'entrée, un premier commutateur (K1) agencé en parallèle au transformateur, des moyens de commande (3) configurés de manière à commander la fermeture dudit premier commutateur en réponse à une défaillance du dispositif ou à une surintensité détectée par les moyens de détection.

3. Dispositif selon la revendication 2, **caractérisé en ce que** lesdits moyens de détection (2, 3) sont configurés de manière à détecter également une sous-tension au niveau de l'entrée, et **en ce que** lesdits moyens de commande (3) sont aptes à commander la fermeture dudit premier commutateur en réponse à une sous-tension détectée par lesdits moyens de détection.

4. Dispositif selon la revendication 2, **caractérisé en ce que** ledit premier commutateur (K1) est un commutateur de contrôleur distant.

5. Dispositif selon la revendication 4, **caractérisé en ce que** lesdits moyens supplémentaires comprennent des deuxième (K2) et troisième (K3) commutateurs de contrôleur distant, et **en ce que** lesdits moyens de commande (3) sont configurés de manière à commander lesdits deuxième et troisième commutateurs de contrôleur distant, lesdits moyens de commande étant configurés de manière à commander l'alimentation du premier commutateur de contrôleur distant ou du deuxième commutateur de contrôleur distant, au moyen du troisième commutateur de contrôleur distant, et la sélection de la première prise ou de la seconde prise au moyen du deuxième commutateur de contrôleur distant, dans le cas où le deuxième commutateur de contrôleur distant est alimenté au moyen du troisième commutateur de contrôleur distant.

6. Dispositif selon la revendication 5, **caractérisé en ce qu'**il comprend un disjoncteur thermomagnétique (50) agencé entre la borne d'entrée du dispositif (1) et une borne (43) du transformateur, lesdits moyens de détection (3) étant configurés de manière à détecter une défaillance du dispositif sur la base de signaux de surveillance respectifs (SK1-SK3, SK50) de l'état dudit disjoncteur thermomagnétique et des premier, deuxième et troisième commutateurs de contrôleur distant.

7. Dispositif selon la revendication 2, **caractérisé en ce que** lesdits moyens de commande (3) sont configurés de manière à forcer la fermeture dudit premier commutateur en réponse à une instruction externe (M).

8. Dispositif selon la revendication 2, **caractérisé en ce que** lesdits moyens de commande (3) sont configurés de manière à maintenir fermé ledit premier commutateur (K1) lorsque ladite tension d'alimentation (Val) du réseau électrique est absente.

9. Dispositif selon la revendication 1, **caractérisé en ce qu'**il comprend une pluralité de thermocouples (82) agencés entre le noyau (80) du transformateur et le boîtier métallique (81) du dispositif, et configurés de manière à convertir la différence thermique entre le noyau et le boîtier métallique en énergie électrique, et à fournir celle-ci au dispositif.

10. Dispositif selon la revendication 1, **caractérisé en ce qu'**il comprend un compteur (7) configuré de manière à quantifier l'énergie électrique fournie à partir dudit dispositif, ledit compteur (7) étant activé (C) par lesdits moyens de commande (3).

11. Dispositif selon la revendication 1, **caractérisé en ce que** ladite tension d'alimentation est triphasée et **en ce que** ledit transformateur (41) comprend trois enroulements primaires (L1a, L1b, L1c) et trois enroulements secondaires (L2a, L2b, L2c), chaque enroulement primaire comprenant au moins deux prises (S1, S2).
